## Europäisches Patentamt

## European Patent Office

## Office européen des brevets

(19)

(11) Veröffentlichungsnummer: **0 164 544**
**B1**

(12) **EUROPÄISCHE PATENTSCHRIFT**

(45) Veröffentlichungstag der Patentschrift:
25.10.89

(51) Int. Cl.⁴: **F 16 H 1/44**

(21) Anmeldenummer: **85105122.7**

(22) Anmeldetag: **26.04.85**

(54) **Differentialgetriebe.**

(30) Priorität: **12.06.84 DE 3421748**

(43) Veröffentlichungstag der Anmeldung:
**18.12.85 Patentblatt 85/51**

(45) Bekanntmachung des Hinweises auf die Patenterteilung:
**25.10.89 Patentblatt 89/43**

(84) Benannte Vertragsstaaten:
**DE FR GB IT SE**

(56) Entgegenhaltungen:
**FR-A-2 229 294**

**PATENTS ABSTRACTS OF JAPAN, Band 7, Nr. 79
(M-204) 1224 , 31. März 1983; & JP - A - 58 4630
(NISSAN JIDOSHA K.K.) 11.01.1983**

(73) Patentinhaber: **AUDI AG, Auto- Union- Strasse 1
Postfach 220, D-8070 Ingolstadt (DE)**

(72) Erfinder: **Barnreiter, Karl, Frühlingstrasse 13,
D-8079 Hitzhofen (DE)**

(74) Vertreter: **Le Vrang, Klaus, AUDI AG Postfach 220
Patentabteilung I/EQP, D-8070 Ingolstadt (DE)**

EP 0 164 544 B1

## Beschreibung

Die Erfindung betrifft ein Differentialgetriebe, insbesondere für ein Kraftfahrzeug, gemäß dem Oberbegriff des Patentanspruches 1.

Ein derartiges Differentialgetriebe ist der FR-A-2 229 294 entnehmbar. Das in dem äußeren Gehäuse verschiebbar geführte Ausgleichsgehäuse ist in der Mittenebene des die Planetenräder tragenden Bolzens geteilt und mittels stirnseitig angeordneter Federn gegen den Bolzen vorgespannt. Der Bolzen sowie die entsprechenden Anlageflächen am Ausgleichsgehäuse sind mit schrägen Rampen versehen, welche bei einer Drehmomentübertragung die beiden Hälften des Ausgleichsgehäuses entgegen der Kraft der Federn auseinanderspannen. Zwischen den Achskegelrädern des Differentialgetriebes und dem Ausgleichsgehäuse sind Reibkupplungen vorgesehen, die die Achskegelräder bei geringer oder keiner Drehmomentübertragung mit dem Ausgleichsgehäuse kuppeln und somit eine Differentialsperre bilden. Die axiale Verschiebbarkeit der beiden Hälften des Ausgleichsgehäuses dient somit dazu, die Kupplungen ab einer definierten Drehmomentübertragung des Differentialgetriebes zu lösen.

Das Ausgleichsgehäuse als Ganzes gesehen ist jedoch innerhalb des äußeren Gehäuses des Differentialgetriebes und insbesondere bei Antriebsübertragung axial unverschiebbar aufgenommen, so daß eine unerwünschte Schwingungs- und Geräuschübertragung von der Brennkraftmaschine über das Differentialgetriebe und die Ab- und Antriebswellen in die Karosserie des Kraftfahrzeuges stattfinden kann.

Aufgabe der Erfindung ist es, ein baulich günstiges, funktionssicheres Differentialgetriebe der gattungsgemäßen Art zu schaffen, welches in Richtung dessen Abtriebswellen schwingungsisolierend wirkt.

Diese Aufgabe wird erfindungsgemäß mit den Kennzeichnenden Merkmalen des Patentanspruches 1 gelöst.

Durch die Schiebeführung des Ausgleichsgehäuses können vom Getriebegehäuse ausgehende Schwingungen nicht mehr auf das Ausgleichgehäuse übertragen werden, so daß eine "zentrale" Schwingungsentkopplung bereits innerhalb des Differentialgetriebes erfolgt. Da an dieser Stelle eine stets gute Schmierung durch das Getriebeöl vorliegt, ist eine leichtgängige, spielfreie und durch das Getriebeöl in einem gewissen Grade gedämpfte Schwingungsentkopplung dauerhaft sichergestellt. Zudem kann durch die zentrale Schwingungsentkopplung Bauraum gespart werden.

Besonders vorteilhaft kann die Schiebeführung des Ausgleichsgehäuses gemäß den Merkmalen der Patentansprüche 2 und 3 ausgeführt sein. Dadurch ergibt sich eine robuste Konstruktion, deren Funktionssicherheit auch bei hohen Antriebs-Momentenübertragungen gewährleistet ist.

Mit den Merkmalen der Patentansprüche 4 und 5 können zweckmäßig die Schwingungsamplituden des Ausgleichsgehäuses unter Vermeidung von Anschlaggeräuschen begrenzt sowie in gewünschtem Maße gedämpft werden. Die Anschläge können bevorzugt Anschlagscheiben aus weichelastischem Gummi oder Kunststoff sein, welche sich stirnseitig zwischen dem Ausgleichgehäuse und dem äußeren Gehäuse des Differentialgetriebes abstützen.

In weiterer, vorteilhafter Ausgestaltung der Erfindung können die Abtriebswellen des Differentialgetriebes entsprechend den Merkmalen der Patentansprüche 6 und 7 angeordnet sein. Dadurch können vom Fahrwerk beim Durchfahren von Kurven oder beim Durchfedern unter Antriebslast ausgehende Momente und Verspannungen als eine "innere" Kraft im Differentialgetriebe abgestützt werden, ohne das die Schwingungsentkopplung zwischen Ausgleichgehäuse und äußerem Gehäuse des Differentialgetriebes beeinträchtigt ist. Die Kugelhülsen sorgen zudem für eine leichtgängige, verspannungsfrei Lagerung der axial begrenzt beweglichen Abtriebswellen, auch bei von den Antriebs-Gelenkwellen ausgeübten Biegemomenten.

Ein Ausführungsbeispiel der Erfindung ist im folgenden mit weiteren Einzelheiten näher erläutert. Die schematische Zeichnung zeigt in

Fig. 1    einen Längsschnitt durch ein erfindungsgemäßes Differentialgetriebe und

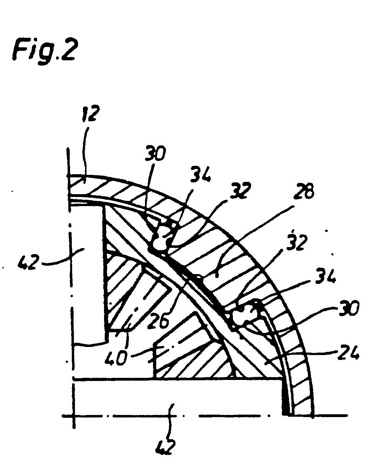

Fig. 2    einen Querschnitt entlang der Linie II - II der Fig. 1.

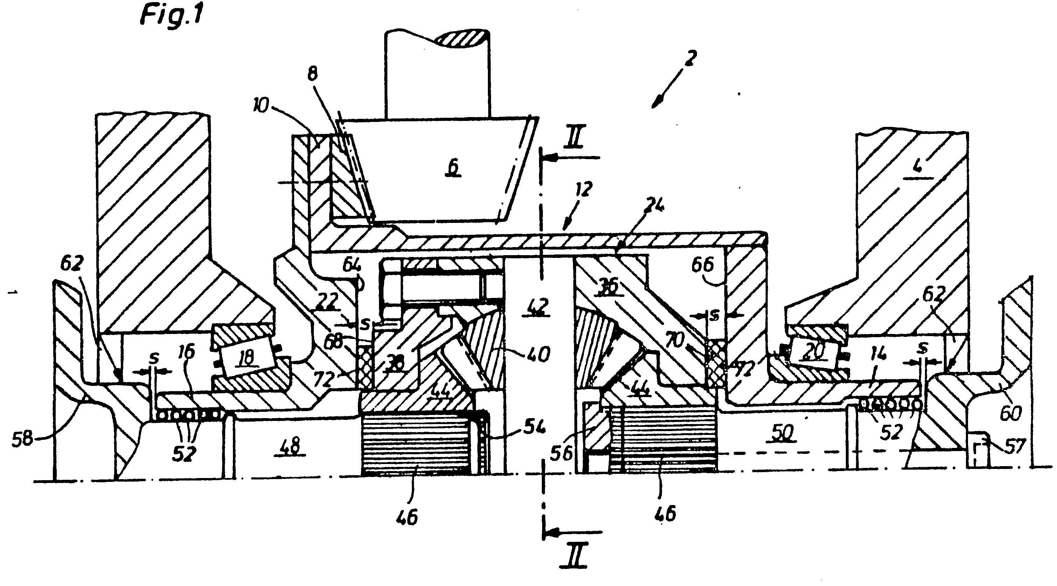

Die Fig. 1 zeigt teilweise ein Differentialgetriebe 2, welches Teil eines mit einer Brennkraftmaschine und einem Wechselgetriebe vereinten Antriebsblockes eines Kraftfahrzeuges ist. Das Differentialgetriebe 2 ist in einem Getriebegehäuse 4 aufgenommen. Ein vom Wechselgetriebe antriebsmäßig abzweigendes Antriebsritzel 6 ist mit einem Zahnrad bzw. einem Tellerrad 8 des Differentialgetriebes in Eingriff. Das Tellerrad 8 ist mittels nicht dargestellter Schrauben an einem Umfangsflansch 10 eines äußeren, rotationssymmetrischen Gehäuses 12 des Differentialgetriebes 2 befestigt.

Das äußere Gehäuse 12 ist mittels zweier rohrförmiger Fortsätze 14, 16 über Kegelrollenlager 18, 20 im Getriebegehäuse 4 drehbar und axial unverschiebbar gelagert. Der Fortsatz 16 ist Teil eines abnehmbaren Deckels 22 des äußeren Gehäuses 12, der zugleich mit dem Tellerrad 8 mit dem äußeren Gehäuse 12 Verschraubbar ist.

Im äußeren Gehäuse 12 ist ein Ausgleichsgehäuse 24 axial verschiebbar geführt. Dazu ist das Ausgleichgehäuse 24 mit umfangsmäßig symmetrisch verteilten Längsnuten 26 versehen, in welche vom äußeren Gehäuse 12 radial nach innen ragende Längsstege 28 eingreifen. Zwischen den radial verlaufenden Nut- und Stegwandungen 30, 32 sind jeweils Linear-Rollenlager 34 vorgesehen, die eine spielfreie, leichtgängige Verschiebebewegung des Ausgleichsgehäuses 24 relativ zum äußeren Gehäuse 12 sicherstellen. Zugleich wird dadurch eine formschlüssige, robuste Drehmomentübertragung zwischen dem äußeren Gehäuse 12 und dem Ausgleichsgehäuse 24 ermöglich.

Im Ausgleichsgehäuse 24, welches sich aus einem Gehäuseteil 36 und einem Deckelteil 38 zusammensetzt, sind mehrere Ausgleichs-Zahnräder bzw. Kegelräder 40 angeordnet, welche auf im Ausgleichsgehäuse 24 festgelegten Bolzen 42 drehbar gelagert sind. Die Kegelräder 40 sind mit zwei Achskegelrädern 44 in Eingriff. Die Achskegelräder 44 wiederum sitzen über Keilwellenverzahnungen 46 auf Abtriebswellen 48, 50 des Differentialgetriebes.

Die Abtriebswellen 48, 50 sind in den rohrförmigen Fortsätzen 14, 16 des äußeren Gehäuses 12 über Linear-Kugelhülsen 52 sowohl drehbar als auch axial verschiebbar gelagert. Ein Sicherungsring 54 sowie eine Sicherungsmutter 56 verhindern ein Herausrutschen der Abtriebswellen 48, 50 aus dem Differentialgetriebe 2. Zwischen den Abtriebsflanschen 58, 60 der Abtriebswellen 48, 50 und dem Getriebegehäuse 4 sind Wellendichtringe 62 zum öldichten Herausführen der Abtriebswellen 48, 50 aus dem Getriebegehäuse 4 vorgesehen.

Die axiale Verschiebbarkeit des Ausgleichsgehäuses 24 und der Abtriebswellen 48, 50 ist zunächst durch das Spiel s bestimmt, welches zwischen den Stirnflächen 64, 66 des äußeren Gehäuses 12 und den benachbarten Stirnflächen 68, 70 des Ausgleichsgehäuses 24 vorgesehen ist. Zwischen diesen Stirnflächen ist je eine weichelastische Anschlagscheibe 72 aus Kunststoff eingesetzt, welche das Ausgleichsgehäuse 24 gegenüber dem äußeren Gehäuse 12 in eine Mittelstellung vorspannen, andererseits aber in einem definiertem Maße Schwingungsamplituden des äußeren Gehäuses 12 gegenüber dem Ausgleichgehäuse 24 zulassen. Ferner muß im Bereich der Linear-Kugelhülsen 52 ein Spiel s vorgesehen sein, um eine axiale Verschiebbarkeit der Abtriebswellen 48, 50 mit dem Ausgleichsgehäuse 24 relativ zum äußeren Gehäuse 12 zu ermöglichen. Es versteht sich, daß auch die im Ausgleichgehäuse 24 axial unverschiebbar gelagerten Achskegelräder 44 derart ausgeführt sein müssen, daß sie die axiale Verschiebbarkeit des Ausgleichgehäuses 24 nicht beeinträchtigen.

Durch die gezeigte Anordnung können in Richtung der Abtriebswellen 48, 50 vom Getriebegehäuse 4 ausgehende Schwingungen aufgrund der axialen Verschiebbarkeit des Ausgleichgehäuses 24 nicht auf die Abtriebswellen 48, 50 bzw. auf den weiteren Antriebszug und gegebenenfalls auf die Karosserie des Kraftfahrzeuges übertragen werden. Andererseits bilden von den an die Abtriebsflansche 58, 60 angeschlossenen Antriebs- oder Gelenkwellen des Kraftfahrzeuges ausgehende, zum Differentialgetriebe 2 gerichtete Kräfte lediglich innere Kräfte, die sich innerhalb des Ausgleichsgehäuses 24 kompensieren und somit auf die Schwingungsentkopplung zwischen dem äußeren Gehäuse 12 und dem Ausgleichsgehäuse 24 keine nachteilige Wirkung ausüben.

**Patentansprüche**

1. Differentialgetriebe (2), insbesondere für ein Kraftfahrzeug, mit einem Antriebsritzel (6), das mit einem Abtriebszahnrad (8) kämmt, welches an einem äußeren Gehäuse (12) befestigt ist, an welchen ein Ausgleichsgehäuse (24), in dem mit Abtriebswellen (48, 50) in trieblicher Verbindung stehende Ausgleichszahnräder (40) angeordnet sind, in Drehrichtung formschlüssig jedoch in Richtung der Abtriebswellen (48, 50) verschiebbar geführt ist, dadurch gekennzeichnet, daß das Ausgleichgehäuse (24) fest mit dem Bolzer (42), der die Ausgleichszahnräder (40) trägt, verbunden ist und daß das Ausgleichsgehäuse (24) bei auftretenden Schwingungen relativ zum äußeren Gehäuse (12) begrenzt verschieblich ist.

2. Differentialgetriebe nach Anspruch 1, dadurch gekennzeichnet, daß die Schiebeführung zwischen dem Ausgleichgehäuse (24) und dem äußeren Gehäuse (12) durch mehrere, umfangsmäßig verteilte Linear-Welzlager (Linear-Rollenlager 34) gebildet ist.

3. Differentialgetriebe nach den Ansprüchen 1 und 2, dadurch gekennzeichnet, daß das Ausgleichsgehäuse (24) mit mehreren Längsnuten (26) versehen ist, in die radial nach innen ragende Stege (28) des äußeren Gehäuses (12) eingreifen und daß zwischen den radial verlaufenden Nut- und Stegwandungen (30, 32) Linear-Rollenlager (34) eingesetzt sind.

4. Differentialgetriebe nach den Ansprüchen 1 bis 3, dadurch gekennzeichnet, daß die Verschiebebewegungen des Ausgleichsgehäuses (24) durch elastisch nachgiebige Anschläge (Anschlagscheiben 72) begrenzt ist.

5. Differentialgetriebe nach den Ansprüchen 1 bis 4, dadurch gekennzeichnet, daß die Anschläge (Anschlagsscheiben 72) das Ausgleichsgehäuse (24) in eine Mittelstellung relativ zum äußeren Gehäuse (12) vorspannen.

6. Differentialgetriebe nach Anspruch 1 dadurch gekennzeichnet, daß die Abtriebswellen (48, 50) zumindest im äußeren Gehäuse (12) axial verschiebbar geführt sind.

7. Differentialgetriebe nach den Ansprüchen 1 und 6, dadurch gekennzeichnet, daß die Abtriebswellen (48, 50) im äußeren Gehäuse (12) über Kugelhülsen (52) mit linearen Kugelreihen gelagert sind.

**Claims**

1. Differential gear mechanism (2), especially for a motor vehicle, with a drive pinion (6) which meshes with an output gear (8) which is fixed to an external housing (12) in which a differential housing (24), in which are located differential gears (40) connected to output shafts (48, 50) in such a way as to drive them, is guided so that it interlocks in the direction of rotation but can move in the direction of the output shafts (48, 50), characterized in that the differential housing (24) is connected rigidly to the pins (42) which carry the differential gears (40) and in that the differential housing (24) can move to a limited extent relative to the external housing (12) when vibrations occur.

2. Differential gear mechanism according to Claim 1, characterized in that the sliding guide system between the differential housing (24) and the external housing (12) is formed by a plurality of linear roller bearings (34) spaced evenly around the circumference.

3. Differential gear mechanism according to Claims 1 and 2, characterized in that the differential housing (24) is provided with a plurality of longitudinal grooves (26) in which are engaged radially inward-projecting lands (28) of the external housing (12) and that linear roller bearings (34) are inserted between the radial groove-and-land walls (30, 32).

4. Differential gear mechanism according to Claims 1 to 3, characterized in that the sliding movement of the differential housing (24) is restricted by elastically-yielding stops (check rings 72).

5. Differential gear mechanism according to Claims 1 to 4, characterized in that the stops (check rings 72) preload the differential housing (24) into a central position relative to the external housing (12).

6. Differential gear mechanism according to Claim 1, characterized in that the output shafts (48, 50) are guided at least in the external housing (12) so that they can move axially.

7. Differential gear mechanism according to Claims 1 and 6, characterized in that the output shafts (48, 50) are supported in the external housing (12) on ball bearing sleeves (52) with linear rows of balls.

**Revendications**

1. Engrenage différentiel (2), en particulier pour un véhicule automobile, comportant un pignon menant (6) en prise avec une roue dentée menée (8) qui est fixée à un carter extérieur (12) sur lequel un boîtier de différentiel (24), dans lequel sont montées des roues dentées de différentiel qui sont en rapport d'entraînement avec des arbres de sortie (48, 50), est guidé de façon bloquée dans le sens de la rotation mais avec possibilité de déplacement en direction des arbres de sortie (48, 50), caractérisé en ce que le boîtier de différentiel (24) est relié rigidement à l'axe (42) qui porte les roues dentées de différentiel (40), et en ce que le boîtier de différentiel (24) peut effectuer un mouvement de translation limité par rapport au carter extérieur (12) au cas où surviennent des vibrations.

2. Engrenage différentiel selon la revendication 1, caractérisé en ce que le guidage glissant entre le boîtier de différentiel (24) et le carter extérieur (12) est constitué par plusieurs paliers à roulement linéaires (paliers à rouleaux linéaires 34) répartis sur la circonférence.

3. Engrenage différentiel selon la revendication 1 ou 2, caractérisé en ce que le boîtier de différentiel (24) est muni de plusieurs rainures longitudinales (26) dans lesquelles s'engagent des nervures (28) du carter extérieur (12), faisant saillie vers l'intérieur en direction radiale, et en ce que les paliers à rouleaux linéaires (34) sont placés entre les parois s'étendant radialement (30, 32) des rainures et des nervures.

4. Engrenage différentiel selon l'une quelconque des revendications 1 à 3, caractérisé en ce que les mouvements de translation du boîtier de différentiel (24) sont limités par des butées déformables élastiquement (disques de butée 72).

5. Engrenage différentiel selon l'une quelconque des revendications 1 à 4, caractérisé en ce que les butées (disques de butée 72) du boîtier de différentiel (24) sont précontraintes dans une position moyenne par rapport au carter extérieur (12).

6. Engrenage différentiel selon la revendication 1, caractérisé en ce que les arbres de sortie (48, 50) sont guidés de façon déplaçable axialement au moins dans le carter extérieur (12).

7. Engrenage différentiel selon l'une quelconque des revendications 1 à 6, caractérisé en ce que les arbres de sortie (48, 50) sont montés dans le carter extérieur (12) au moyen de manchons à billes (52) contenant des rangées linéaires de billes.

Fig.1

EP 0 164 544 B1

# Fig.2